# NEUE EUROPÄISCHE PATENTSCHRIFT

(11) **EP 2 995 191 B2**
(45) Veröffentlichungstag und Bekanntmachung des Hinweises auf die Entscheidung über den Einspruch: **07.10.2020**
(45) Hinweis auf die Patenterteilung: 11.10.2017
(21) Anmeldenummer: 15172267.5
(22) Anmeldetag: 16.06.2015
(51) Int. Cl.: A01F 12/58, A01D 41/127, A01D 43/073, A01D 43/08

(54) **VERFAHREN ZUR STEUERUNG EINES ÜBERLADEPROZESSES**
METHOD FOR CONTROLLING AN OVERLOAD PROCESS
PROCÉDÉ DE COMMANDE D'UN PROCESSUS DE TRANSBORDEMENT

(30) Priorität: 10.09.2014 DE 102014113001
(43) Veröffentlichungstag der Anmeldung: 16.03.2016
(73) Patentinhaber: CLAAS Selbstfahrende Erntemaschinen GmbH, 33428 Harsewinkel (DE)
(72) Erfinder: Krause, Thiilo, 39249 Glinde (DE); Middelberg, René, 49080 Osnabrück (DE); Terörde, Stefan, 48231 Warendorf (DE); Bormann, Bastian, 33334 Gütersloh (DE)
(74) Vertreter: CLAAS Gruppe

(56) Entgegenhaltungen:
- EP-A1- 1 731 983
- EP-A1- 2 266 383
- EP-A1- 2 526 752
- EP-A1- 2 702 854
- WO-A1-98/46065
- WO-A1-2012/110544
- DE-A1-102010 043 854
- DE-A1-102012 211 001
- US-A- 5 855 108
- US-A1- 2014 224 377

## Beschreibung

Die vorliegende Erfindung betrifft ein Verfahren zur Steuerung eines Überladeprozesses gemäß dem Obergriff des Anspruches 1 sowie eine selbstfahrende Erntemaschine gemäß dem Oberbegriff des Anspruches 13.

Ein Verfahren zur Steuerung eines Überladeprozesses während eines laufenden Ernteprozesses sowie eine selbstfahrende Erntemaschine der eingangs genannten Art sind aus der WO 2013/096593 A1 bekannt. Darin ist ein Mähdrescher mit einer Überladeeinrichtung sowie einer Steuerungseinrichtung beschrieben, welche dazu eingerichtet ist, von einem Begleitfahrzeug Steuersignale zu empfangen und auszuwerten. Basierend auf der Auswertung des externen Steuersignales wird der Betrieb der Überladeeinrichtung des Mähdreschers beeinflusst. Tritt während des Überladeprozesses vom Mähdrescher auf das Begleitfahrzeug die Situation auf, dass entlang der Fahrstrecke des Begleitfahrzeuges ein Hindernis auftaucht, führt das Begleitfahrzeug eine Ausweichbewegung aus. Die Ausweichbewegung führt dazu, dass der Überladeprozess in Folge des von dem Begleitfahrzeug gesendeten Signals unterbrochen wird, um Erntegutverluste zu vermeiden. Die Steuerung des Überladeprozesses erfolgt stets in Abhängigkeit von einem externen Steuersignal, welches lediglich die Betriebssituation des Begleitfahrzeugs widerspiegelt.

Weiterhin ist es bekannt, dass der Überladeprozess, das heißt das Ein-und Ausschalten der Überladevorrichtung, während des laufenden Ernteprozesses manuell von der Bedienperson der Erntemaschine gesteuert wird. Das Auftreten einer kritischen Betriebssituation während des Überladeprozesses, die im Allgemeinen durch eine Warn- oder Fehlermeldung auf einer Anzeigeeinrichtung der Erntemaschine der Bedienperson signalisiert wird, führt dazu, dass sich die Bedienperson im Allgemeinen der Behebung dieser kritischen Betriebssituation widmet und dabei den laufenden Überladeprozess zumindest kurzzeitig außer Acht lässt. Dadurch kommt es in der Regel zu Erntegutverlusten. Der Überladeprozess erfordert zusätzliche Antriebsleistung, die von der Erntemaschine bereitgestellt werden muss. Entsprechend steht den übrigen Arbeitsorganen der Erntemaschine während der Dauer des Überladeprozesses weniger Antriebsleistung zur Verfügung. Tritt eine Überlastsituation an einem der Arbeitsorgane auf, wird als Reaktion hierauf die Vorfahrtgeschwindigkeit stark reduziert. Dies hat zur Folge, dass zwischen dem Begleitfahrzeug und der Erntemaschine eine Geschwindigkeitsdifferenz auftritt, die wiederum zu Überladeverlusten führt, da die Bedienperson des Begleitfahrzeuges nicht in gleicher Weise zeitnah auf die Vorfahrtgeschwindigkeitsänderung der Erntemaschine reagieren kann.

Aus der EP 2 702 854 A1 ist es bekannt, bei einsetzender Motordrückung zumindest einen Arbeitsparameter wenigstens eines Arbeitsorganes in Abhängigkeit von der Drehzahl des Verbrennungsmotors automatisch anzupassen. Die Druckschrift offenbart auch, einen Abtankvorgang zu unterbrechen, um eine schnelle Entlastung des Verbrennungsmotors zu erreichen.

Die Druckschrift WO 2012/110544 A1 offenbart ein Verfahren zum Steuern eines Auswurfkrümmers eines Mähdreschers, bei dem die Entfernung zwischen dem Mähdrescher und einem Transportfahrzeug prognostiziert und an eine Steuerung des Auswurfkrümmers übermittelt wird, und bei dem dann eine Betriebskonfiguration des Auswurfkrümmers in Abhängigkeit von den übermittelten Werten eingestellt wird.

Aufgabe der vorliegenden Erfindung ist es, ein Verfahren zur Steuerung eines im laufenden Erntebetrieb stattfindenden Überladeprozesses sowie eine Erntemaschine bereitzustellen, welche das Auftreten von Überladeverlusten während kritischer Betriebssituationen der Erntemaschine minimiert.

Diese Aufgabe wird durch ein Verfahren gemäß den Merkmalen des Anspruches 1 und durch eine selbstfahrende Erntemaschine gemäß den Merkmalen des Anspruches 13 gelöst.

Vorteilhafte Weiterbildungen sind Gegenstand der Unteransprüche.

Gemäß dem Anspruch 1 wird vorgeschlagen, dass während des Überladeprozesses durch die Steuerungseinrichtung eine Überwachung der Betriebssituation der Erntemaschine durchgeführt wird und dass bei einem Erkennen einer kritischen Betriebssituation durch die Steuerungseinrichtung automatisch eine Abschaltung der Überladevorrichtung initiiert wird. Die Bedienperson wird bei einem Auftreten einer kritischen Betriebssituation davon entlastet, sich neben der Beurteilung und anschließenden Behebung dieser Situation zusätzlich um den stattfindenden Überladeprozess kümmern zu müssen. Zudem wird durch die Abschaltung der Überladevorrichtung automatisch Antriebsleistung freigesetzt. Erfindungsgemäß wird die durch die Unterbrechung des Überladeprozesses frei werdende Antriebsleistung von der Steuerungseinrichtung zumindest einem Arbeitsorgan zugewiesen.

Dabei wird die Zuweisung der frei werdenden Antriebsleistung in Abhängigkeit von einem eine Überlastsituation signalisierenden Arbeitsorgan durchgeführt. Durch die erfindungsgemäße gezielte Zuweisung der durch die Abschaltung der Überladevorrichtung frei werdenden Antriebsleistung an das Arbeitsorgan, welches eine Überlast an die Steuerungseinrichtung signalisiert, kann die Überlastsituation abgemildert oder abgestellt werden.

Insbesondere kann durch ein Bussystem zumindest ein eine Betriebssituation repräsentierendes Signal an die Steuerungseinrichtung übertragen werden, welches zur Erkennung der Betriebssituation von der Steuerungseinrichtung ausgewertet wird.

Weiterhin kann mittels einer optischen Sensoreinrichtung an der Erntemaschine das Vorhandensein eines Hindernisses im Vorfeld der Erntemaschine und/oder des Transportfahrzeuges detektiert werden. Die optische Sensoreinrichtung liefert Daten an die Steuerungseinrichtung, die der Erkennung der Fahrsituation dienen. Die optische Sensoreinrichtung ist dazu eingerichtet, Hindernisse, die im Fahrweg der Erntemaschine und/oder des Transportfahrzeuges liegen zu erkennen. Die Steuerungseinrichtung ist dazu eingerichtet, die von der optischen Sensoreinrichtung bereitgestellten Daten auszuwerten. Wird das Auftreten eines Hindernisses im Fahrweg erkannt, wird in Abhängigkeit von der Durchführbarkeit einer gleichförmigen Ausweichbewegung durch die Erntemaschine und das Transportfahrzeug die Überladevorrichtung entsprechend angesteuert. Ist eine gleichförmige Ausweichbewegung von Erntemaschine und Transportfahrzeug, das heißt eine im Wesentlichen parallele Spurführung, nicht durchführbar, wird der Überladeprozess unterbrochen.

Des Weiteren kann mittels einer Sensorvorrichtung an der Überladevorrichtung die Bereitschaft des Transportfahrzeuges zum Überladen detektiert und als ein Bereitschaftssignal an die Steuerungseinrichtung weitergeleitet werden. Die Bereitschaft des Transportfahrzeuges wird durch das Vorhandensein und/oder der Füllstand des Transportfahrzeuges und/oder das Detektieren des für das verlustfrei Überladen erforderliche Abstandes zwischen der Erntemaschine und dem Transportfahrzeug charakterisiert.

Weiterhin kann mittels einer Sensorvorrichtung an der Überladevorrichtung die Bereitschaft des Mähdreschers zum Überladen detektiert und als ein Bereitschaftssignal an die Steuerungseinrichtung weitergeleitet werden. Die Sensorvorrichtung ist vorzugsweise als eine Kamera ausgeführt. Mittels der Sensorvorrichtung wird der Gutfluss aus der Überladevorrichtung optisch erfasst. Wird ein Ausbleiben des Gutflusses detektiert, so lässt dies den Rückschluss zu, dass ein Speicherbehältnis der Erntemaschine entleert ist.

Darüber hinaus kann mittels der Sensorvorrichtung detektiert werden, wenn der von der Überladevorrichtung abgegebene Gutstrom einen definierbaren Schwellwert unterschreitet. Diese Situation kann eintreten, wenn während des Dreschens auf das Transportfahrzeug überladen wird. Sobald Speicherbehältnis der Erntemaschine entleert ist, nimmt der Gutstrom aus der Überladevorrichtung stark ab. Diese Veränderung des abgegebenen Gutstromes kann von der Sensorvorrichtung detektiert werden. Die Steuerungseinrichtung wertet ein entsprechendes Signal aus und sendet ein Signal an die Überladevorrichtung, um den Überladeprozess automatisch zu beenden.

Hierbei kann in Abhängigkeit von dem Bereitschaftssignal die Überladevorrichtung automatisch ein- oder ausgeschaltet werden. Entsprechend kann beispielsweise nach einem ungleichförmigen Ausweichmanöver von Erntemaschine und Transportfahrzeug auf Grund eines Hindernisses im Fahrweg der Überladeprozess wieder aufgenommen werden, wenn die Bereitschaft des Transportfahrzeuges zum Überladen detektiert und als Bereitschaftssignal an die Steuerungseinrichtung weitergeleitet wird. Die Steuerungseinrichtung steuert die Überladevorrichtung entsprechend an, damit der Überladeprozess fortgesetzt wird.

Vorzugsweise kann mittels eines Drehzahlsensors ein Absinken der Antriebsdrehzahl eines das Erntegut abscheidenden Arbeitsorgans detektiert und als ein Drehzahlsignal an die Steuerungseinrichtung weitergeleitet werden. Durch das Detektieren des Absinkens der Antriebsdrehzahl kann auf eine Überlastsituation eines dem Antrieb der Arbeitsorgane dienenden Verbrennungsmotors geschlossen werden.

Weiterhin kann das Auftreten von Schlupf an einem Arbeitsorgan detektiert und als ein Schlupfsignal an die Steuerungseinrichtung weitergeleitet werden. Das Auftreten von Schlupf beim Antreiben der Arbeitsorgane ist gleichfalls ein Indiz für eine Überlastsituation im Betrieb des dem Antrieb der Arbeitsorgane dienenden Verbrennungsmotors.

Insbesondere kann eine Lenkbewegung sensorisch erfasst und als ein Lenksignal an die Steuerungseinrichtung weitergeleitet werden. Anhand der Größenordnung des Lenksignals kann durch die Steuerungseinrichtung ausgewertet werden, ob die daraus resultierende Lenkbewegung zu einer kritischen Betriebssituation führt, die den Überladeprozess gefährdet.

Weiterhin kann der Betrag einer Beschleunigung der Erntemaschine erfasst und als ein Beschleunigungssignal an die Steuerungseinrichtung weitergeleitet werden. Die einseitige Beschleunigung der Erntemaschine durch die Bedienperson der Erntemaschine kann zu einem räumlichen Versatz zwischen dieser und dem Transportfahrzeug, wodurch ein sicheres Überladen nicht gewährleistet ist.

Bevorzugt kann ein die Qualität eines Bearbeitungsprozesses eines Arbeitsorganes repräsentierendes Qualitätssignal an die Steuerungseinrichtung weitergeleitet werden. Bei dem Qualitätssignal kann es sich beispielsweise um ein die Qualität des Druschprozesses repräsentierendes Signal handeln, welches von der Steuerungseinrichtung ausgewertet wird. Wird auf Grund des Qualitätssignales festgestellt, dass die Druschqualität während des Überladeprozesses nicht aufrechterhalten werden kann, so wird der Überladeprozess unterbrochen, um dem Druschprozess mehr Antriebsleistung zur Verfügung stellen zu können. Entsprechendes kann auch für den Prozess der Abscheidung beziehungsweise der Reinigung gelten.

Gemäß dem unabhängigen Anspruch 13 wird zur Lösung der eingangs gestellten Aufgabe eine selbstfahrende Erntemaschine mit einer Steuerungseinrichtung vorgeschlagen, die dazu eingerichtet ist, einen im laufenden Erntebetrieb stattfindenden Überladeprozess, während dessen von einer Überladevorrichtung der mehrere Arbeitsorgane umfassenden Erntemaschine Erntegut an ein Transportfahrzeug übergeben wird, zu steuern, wobei die Steuerungseinrichtung dazu eingerichtet ist, während des Überladeprozesses eine Überwachung der Betriebssituation der Erntemaschine durchzuführen und bei einem Erkennen einer kritischen Betriebssituation automatisch eine Abschaltung der Überladevorrichtung zu initiieren, wobei die Steuerungseinrichtung weiterhin dazu eingerichtet ist die durch die Unterbrechung des Überladeprozesses frei werdende Antriebsleistung zumindest einem Arbeitsorgan zuzuweisen, wobei die frei werdende Antriebsleistung gezielt dem Arbeitsorgan zugewiesen wird, welches eine Überlast an die Steuerungseinrichtung signalisiert.

Vorzugsweise kann die selbstfahrende Erntemaschine als ein Mähdrescher ausgeführt sein.

Die vorliegende Erfindung wird anhand eines in den Zeichnungen dargestellten Ausführungsbeispieles näher erläutert.

Es zeigen:
- Fig. 1: eine schematische Seitenansicht einer landwirtschaftlichen Erntemaschine;
- Fig. 2: eine schematische Draufsicht auf eine landwirtschaftlichen Erntemaschine und ein diese begleitendes Transportfahrzeug während eines Überladeprozesses;
- Fig. 3: ein Flussdiagramm zur Veranschaulichung der Steuerung und Überwachung des Überladeprozesses.

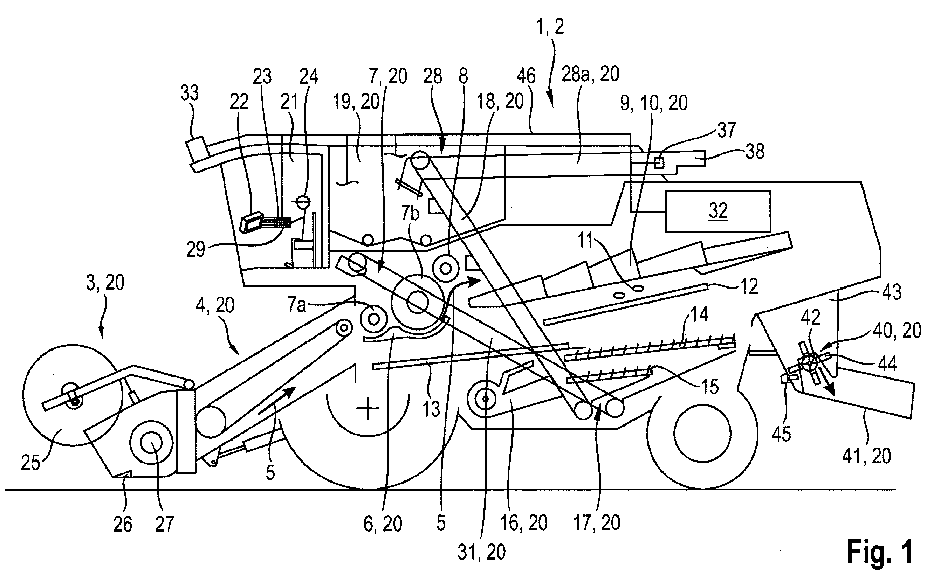

Die in Fig. 1 schematisch dargestellte, als Mähdrescher 2 ausgeführte landwirtschaftliche Erntemaschine 1 nimmt in ihrem frontseitigen Bereich ein Vorsatzgerät wie Getreideschneidwerk 3 auf, welches in an sich bekannter Weise mit dem Schrägförderer 4 des Mähdreschers 2 verbunden ist. Der den Schrägförderer 4 durchlaufende Erntegutstrom, der durch den Pfeil 5 angedeutet ist, wird in dem obenseitigen, rückwärtigen Bereich des Schrägförderers 4 an die untenseitig zumindest teilweise von einem sogenannten Dreschkorb 6 abschnittsweise ummantelten Dreschorgane 7 des Mähdreschers 2 übergeben. Die Dreschorgane 7 umfassen eine Vorbeschleunigertrommel 7a sowie eine Dreschtrommel 7b. Eine den Dreschorganen 7 nachgeordnete Zuführtrommel 8 lenkt den im rückwärtigen Bereich der Dreschorgane 7 aus diesen austretenden Erntegutstrom 5 so um, dass er unmittelbar an eine als Hordenschüttler 9 ausgeführte Abscheideeinrichtung 10 übergeben wird. Auf dem oszillierenden Hordenschüttler 9 wird der Erntegutstrom 5 so gefördert, dass in dem Erntegutstrom 5 enthaltene freibewegliche Körner 11 im untenseitigen Bereich des Hordenschüttlers 9 abgeschieden werden. Die Trenneinrichtung 10 kann auch als zumindest ein Axialabscheiderotor ausgeführt sein.

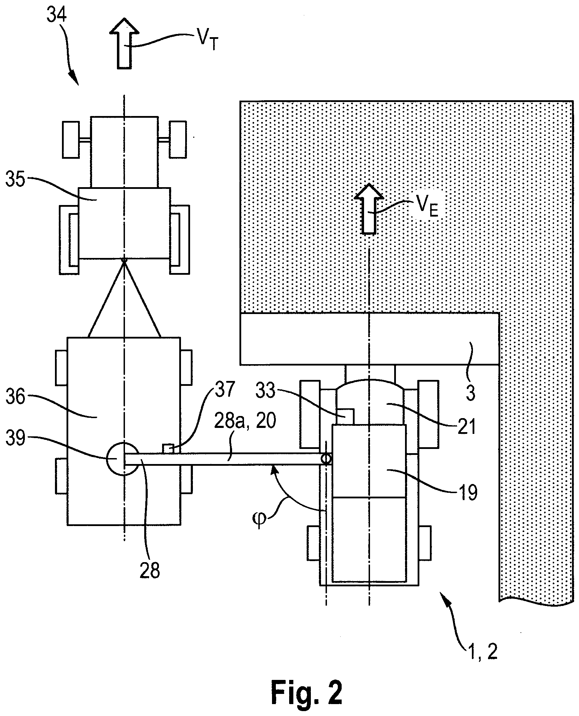

Sowohl die am Dreschkorb 6 als auch am Hordenschüttler 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich durch einen Elevator 18 an ein als Korntank 19 ausgeführtes Speicherbehältnis übergeben. Das im Korntank 19 enthaltene Erntegut wird mittels einer Korntankentleervorrichtung 28, welche ein Korntankauslaufrohr 28a sowie Antriebsmittel umfasst, an ein den Mähdrescher 2 begleitendes Transportfahrzeug 34 übergeben, wie in Fig. 2 dargestellt. Das Korntankauslaufrohr 28a weist an seinem freien Ende 38 eine Sensorvorrichtung 37 auf.

Die Siebebenen 14, 15 sind teilweise übereinander angeordnet, so dass das Erntegut in zwei Stufen unterschiedlich fein gesiebt wird, wobei die Maschenweite der Siebebenen 14, 15 veränderbar ist. Durch die Veränderung der Maschenweite und/oder der Drehzahl des Gebläses 16 lassen sich der Anteil und die Zusammensetzung der Erntegutmenge, die durch die Sieböffnungen hindurch tritt, der so genannte Siebdurchgang, und der Anteil der über die Siebebenen 14, 15 transportiert wird, der so genannte Siebüberlauf, beeinflussen. Zudem ist die obere Siebebene 14 in der Regel so ausgeführt, dass sie in ihrem rückwärtigen Bereich, dem so genannten Überkehrbereich, eine größere Maschenweiten aufweist. Ein Siebdurchgang, der im Überkehrbereich durch die obere Siebebene 14 hindurch fällt und ein Siebüberlauf am Ende der unteren Siebebene 15 enthält in der Regel schwerere Teilchen, das heißt unausgedroschene Ähren. Der Siebdurchgang zusammen mit dem Siebüberlauf wird nachfolgend als so genannte Überkehrerntegutmenge bezeichnet. Die Überkehrerntegutmenge fällt auf einen schräg verlaufenden Auffangboden 30 unterhalb der Reinigungseinrichtung 17 und gleitet in eine Ährenförderschnecke. Die Ährenförderschnecke fördert die Überkehrerntegutmenge in einen Überkehrelevator 31, durch den sie erneut den Dreschorganen 7 zugeführt werden.

Stroh wandert über den Hordenschüttler 9 zum hinteren Ende des Mähdreschers 2, wo es einer Häckselvorrichtung 40 und einer dieser zugeordneten Verteilvorrichtung 41 zugeführt werden. Die Häckselvorrichtung 40 weist unter anderem eine rotierende Häckseltrommel 42 auf, die in einem Häckslergehäuse 43 gelagert ist. Die Häckseltrommel 42 ist mit beweglichen Messern 44 besetzt, die mit im Häckslergehäuse 43 fest angeordneten Gegenmessern 45 kämmen. Mit diesen Messern 44 und den Gegenmessern 45 wird das Stroh zu Häckselgut zerkleinert und beschleunigt. Der aus der Häckselvorrichtung 40 austretende, im Wesentlichen aus gehäckseltem Stroh und Spreu bestehende Gutstrom wird an die Verteilvorrichtung 41 weiterbefördert, die den Gutstrom auf dem Feld verteilt.

Im Folgenden werden aus Gründen der Vereinfachung das Getreideschneidwerk 3, der Schrägförderer 4, die Dreschorgane 7, 7a, 7b und der ihnen zugeordnete Dreschkorb 6, die Zuführtrommel 8, die Trenneinrichtung 10, die Reinigungseinrichtung 17, der Elevator 18, der Überkehrelevator 31, die Häckselvorrichtung 40, die Verteilvorrichtung 41, die Korntankentleervorrichtung 28 sowie das Korntankauslaufrohr 28a verallgemeinernd als Arbeitsorgane 20 der landwirtschaftlichen Erntemaschine 1 bezeichnet. Die erforderliche Antriebsleistung der Arbeitsorgane 20 wird von einem als Verbrennungsmotor ausgeführten Antrieb 32 bereitgestellt, und mittels Riementrieb oder dergleichen an das jeweilige Arbeitsorgan 20 übertragen.

Weiterhin verfügt die landwirtschaftliche Erntemaschine 1, die abweichend vom hier dargestellten Mähdrescher 2 auch ein Feldhäcksler sein kann, über eine Fahrzeugkabine 21. In der Fahrzeugkabine 21 ist zumindest eine mit einer Anzeigeeinrichtung 22 sowie einer Eingabeeinrichtung 29 versehene Steuerungseinrichtung 23 angeordnet, mittels derer, automatisch oder manuell von einer Bedienperson 24 der landwirtschaftlichen Arbeitsmaschine 1 initiiert, eine Vielzahl von Prozessen zum Betreiben der Erntemaschine 1 gesteuert beziehungsweise geregelt werden kann. Die Steuerungseinrichtung 23 ist dazu eingerichtet, Signale von Sensoren beziehungsweise der Sensorvorrichtung 37 zu empfangen und auszuwerten. Auf Grund dieser Auswertung kann die Steuerungseinrichtung 23 unter anderem die Arbeitsorgane 20 steuern beziehungsweise regeln. Die Steuerungseinrichtung 23 kommuniziert bidirektional mittels eines in Fig. 1 angedeuteten Bussystems 46 mit den verschiedenen Arbeitsorganen 20 der Erntemaschine 1 beziehungsweise deren für den Antrieb und die Einstellung vorgesehenen Aktoren, wie auch mit dem Antrieb 32. Auf dem Dach der Fahrzeugkabine 21 ist eine optische Sensorvorrichtung 33 angeordnet, die, wie auch die Sensorvorrichtung 37 am Korntankauslaufrohr 28a, durch das Bussystem 46 jeweils mit der Steuerungseinrichtung 23 verbunden ist.

In an sich bekannter Weise umfasst das Getreideschneidwerk 3 unter anderem eine Haspel 25, einen Messerbalken 26 sowie eine Einzugsförderschnecke 27, wie in Fig. 1 angedeutet.

In Fig. 2 eine schematische Draufsicht auf eine landwirtschaftlichen Erntemaschine 1 und ein diese begleitendes Transportfahrzeug 34 während eines Überladeprozesses dargestellt. Das Transportfahrzeug 34 kann dabei beispielsweise ein Lastkraftwagen oder, wie hier dargestellt, ein Traktor 35 mit einem Anhänger 36 sein. Das Korntankauslaufrohr 28a ist um einen Schwenkwinkel ϕ aus einer Ruhe- beziehungsweise Transportposition in eine Betriebsposition verschwenkt. Mit 39 ist ein Auftreffpunkt des Erntegutes auf dem Anhänger 36 bezeichnet. Der Auftreffpunkt 39 wandert während des Überladens in Längsrichtung des Anhängers 36, um eine gleichmäßige und vollständige Befüllung zu erzielen. Hierzu kann die Fahrgeschwindigkeit V_{T} des Traktors oder die Fahrgeschwindigkeit V_{E} der Erntemaschine 1 temporär variiert werden. Im Übrigen fahren die Erntemaschine 1 und das Transportfahrzeug 34 mit der gleichen Fahrgeschwindigkeit V_{E} beziehungsweise V_{T}, um den Ernteprozess während des Überladeprozesses fortführen zu können. Das Überladen während der Fortführung des Ernteprozesses dient der Steigerung der Produktivität der Erntemaschine 1 beziehungsweise des Mähdreschers 2.

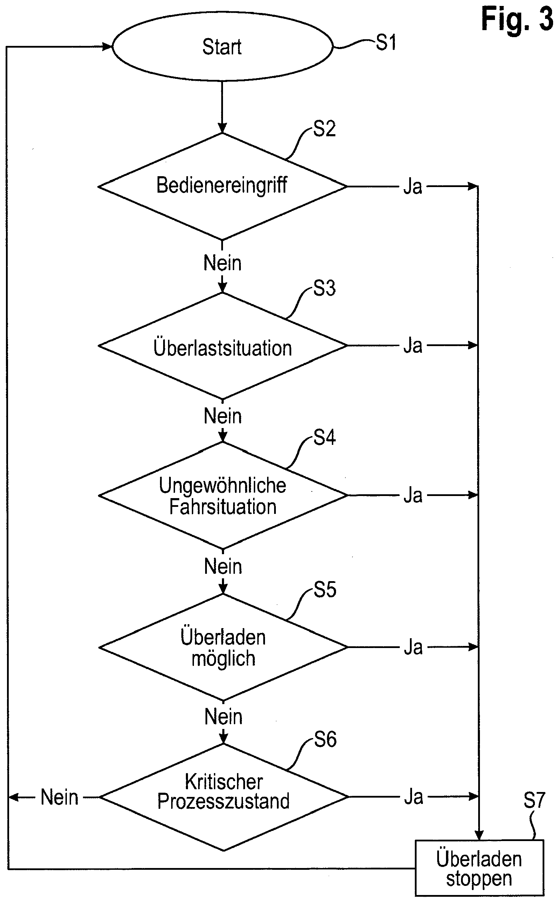

Die Darstellung in Fig. 3 zeigt ein Flussdiagramm, gemäß dem die Steuerung und Überwachung des Überladeprozesses von der Erntemaschine 1 beziehungsweise dem Mähdrescher 2 auf das Transportfahrzeug 34 durchgeführt wird. Mit dem Starten des Überladeprozesses beginnt im Schritt S1 der Prozess der Überwachung des Überladens während des parallel hierzu ablaufenden Erntevorganges. Die Steuerungseinrichtung 23 überwacht die Betriebssituation der Erntemaschine 1 beziehungsweise des Mähdreschers 2 unter anderem während des Überladeprozesses.

Die Betriebssituation des Mähdreschers 2 wird von verschiedenen internen und externen Parametern beeinflusst. Einer dieser Parameter ist ein Eingriff der Bedienperson 24 in den Fahrbetrieb, indem dieser die Erntemaschine 1 beziehungsweise den Mähdrescher 2 abrupt beschleunigt oder verzögert, wodurch sich die Fahrgeschwindigkeiten V_{E} beziehungsweise V_{T} des Mähdreschers 2 und des Transportfahrzeuges 34 relativ zueinander verändern. Diese Änderung hätte einen räumlichen Versatz zwischen dem mit unveränderter Fahrgeschwindigkeit V_{T} bewegten Transportfahrzeug 34 und dem Mähdrescher 2 zur Folge. Entsprechend könnte Erntegut hinter oder vor dem Transportfahrzeug 34 übergeben werden, so dass es zumindest teilweise auf den Boden fällt.

Einen weiteren Parameter stellt eine außergewöhnliche Fahrsituation dar, die beispielsweise aus einer Detektion eines Hindernisses vor der Erntemaschine 1 und/oder dem Transportfahrzeug 34 resultiert. Durch das Auftauchen eines Hindernisses in Fahrtrichtung der Erntemaschine 1 und des Transportfahrzeuges 34 kann eine unterschiedliche Ausweichbewegung erforderlich werden, die zu einer seitlichen Beabstandung führt. Die seitliche Beabstandung in Folge einer entgegen gerichteten Ausweichbewegung, kann zu einer Beabstandung führen, welche den maximalen seitlichen Abstand zwischen der Erntemaschine 1 und dem Transportfahrzeug 34 überschreitet, innerhalb dessen ein verlustfreies Überladen möglich ist.

Das Erreichen des maximalen Füllstandes des Transportfahrzeugs 34 ist ebenfalls ein Parameter, der die Betriebssituation des Mähdreschers 2 beeinflusst. Mit dem Erreichen des maximalen Füllstandes ist ein weiteres Übergeben von Erntegut an das Transportfahrzeug 34 verlustfrei nicht mehr möglich.

Weiterhin stellt die Einhaltung von Qualitätsvorgaben an das Ergebnis des Bearbeitungsprozesses durch den Mähdrescher 2 einen weiteren Parameter dar, der die Betriebssituation beeinflusst. Da der Überladeprozess einen nicht unerheblichen Anteil der zur Verfügung stehenden Antriebsleistung des Mähdreschers 2 beansprucht, kann dieser Anteil an Antriebsleistung in Betriebssituationen des Mähdreschers 2, in denen beispielsweise die Dreschorgane 7, 7a, 7b zur Beibehaltung der Ausdruschqualität temporär eine höhere Leistungsaufnahme haben, nicht bereitgestellt werden.

In den nachfolgenden Schritten S2 bis S6 wird sequentiell geprüft, ob eine kritische Betriebssituation eingetreten ist, die ein Stoppen des Überladens gemäß Schritt S7 erforderlich werden lässt.

In Schritt S2 wird das Vorliegen eines Bedienereingriffes überwacht. Unter einem Bedienreingriff wird das manuelle Eingreifen einer Bedienperson in den Überladeprozess verstanden, beispielsweise in Gestalt eines manuellen Beschleunigens oder Abbremsens des Mähdreschers 1 oder ein von der Bedienperson gesteuertes Schwenken des Korntankauslaufrohres 28a.

In einem Schritt S3 wird das Vorliegen einer Überlastsituation geprüft, beispielsweise hervorgerufen durch eine erhöhte Aufnahme der zu verarbeitenden Erntegutmenge. Hierzu wird mittels eines Drehzahlsensors ein Absinken der Antriebsdrehzahl eines das Erntegut abscheidenden Arbeitsorgans detektiert und als ein Drehzahlsignal an die Steuerungseinrichtung 23 weitergeleitet. Die Steuerungseinrichtung 23 wertet das Drehzahlsignal anhand eines Soll-Ist-Vergleiches der aktuellen Drehzahl eines jeden Arbeitsorganes 20 aus, um zu entscheiden, ob eine Überlastsituation des Arbeitsorganes 20 vorliegt. Dabei variieren die Soll-Drehzahlen zwischen den verschiedenen Arbeitsorganen 20. Wird eine Überlastsituation detektiert, wird der Überladeprozess unterbrochen. Die durch die Unterbrechung des Überladeprozesses freiwerdende Antriebsleistung der Korntankentleervorrichtung 28 wird von der Steuerungseinrichtung 23 automatisch den anderen Arbeitsorganen zur Verfügung gestellt, um die Überlastsituation zumindest zu mindern. Die Zuweisung der freigewordenen Antriebsleistung erfolgt zielgerichtet durch die Steuerungseinrichtung 23 an das oder die Arbeitsorgane, die sich in einer Überlastsituation befinden.

In einem weiteren Schritt S4 wird das Vorliegen einer ungewöhnlichen Fahrsituation geprüft. Hierzu wird beispielsweise mittels der optischen Sensoreinrichtung 33 an der Erntemaschine 1 das Vorhandensein eines Hindernisses im Vorfeld der Erntemaschine 1 und/oder des Transportfahrzeuges 34 detektiert. Das Auftreten eines Hindernisses kann zu einer ungleichförmigen Ausweichbewegung von Erntemaschine 1 und Transportfahrzeug 34 führen. Hierbei kann die ungleichförmige Ausweichbewegung durch die jeweilige Bedienperson von Erntemaschine 1 und Transportfahrzeug 34 initiiert werden. Denkbar ist aber auch im Fall einer automatisierten Steuerung des Transportfahrzeuges 34 durch die Erntemaschine 1 zumindest für die Dauer des Überladeprozesses, dass bei einem Auftreten eines nichtkartierten Hindernisses die Steuerung der Erntemaschine 1 eine ungleichförmige Ausweichbewegung veranlasst. Um während dieser ungleichförmigen Ausweichbewegung Kornverluste beim Überladen zu vermeiden, wird der Überladeprozess automatisch durch die Steuerungseinrichtung 23 unterbrochen.

Entsprechend kann eine Lenkbewegung zumindest der Erntemaschine 1 sensorisch erfasst und als ein Lenksignal an die Steuerungseinrichtung 23 zur Auswertung weitergeleitet werden. Die Steuerungseinrichtung 23 bestimmt anhand des Lenksignals eine Abweichung von den im Wesentlichen zueinander parallel verlaufenden Fahrspuren der Erntemaschine 1 und dem Transportfahrzeug 34. Eine hieraus resultierende Unterbeziehungsweise Überschreitung des für das verlustfreie Überladen erforderlichen Abstandes führt zu einer Unterbrechung des Überladeprozesses, die durch die Steuerungseinrichtung 23 gemäß dem Schritt S7 initiiert wird.

In einem Schritt S5 wird geprüft, ob ein Überladen auf das Transportfahrzeug 34 möglich ist. Unter das Kriterium ob ein Überladen möglich ist, fällt neben der Füllstandsüberwachung des Transportfahrzeuges 34 auch das Feststellen der Anwesenheit des Transportfahrzeuges 34 sowie dessen Beabstandung zu der Erntemaschine 1. In allen Fällen, das Transportfahrzeug 34 ist nicht anwesend, der für das Überladen notwendige Abstand ist nicht erreicht oder wird nicht eingehalten oder das Transportfahrzeug 34 ist vollständig gefüllt, ist das Kriterium, dass ein Überladen nicht oder nicht mehr möglich ist, erfüllt. Die Überwachung des Füllstandes des Transportfahrzeugs 34 beziehungsweise des Anhängers 36 respektive der Anwesenheit des Transportfahrzeugs 34 sowie dessen Beabstandung zu der Erntemaschine 1 erfolgt durch die Sensorvorrichtung 37. Die Sensorvorrichtung 37 ist dazu eingerichtet, ein die Anwesenheit des Transportfahrzeugs 34, den Abstand des Transportfahrzeuges 34 oder den jeweiligen Füllstand des Transportfahrzeugs 34 beziehungsweise des Anhängers 36 repräsentierendes Signal zu erzeugen. Mit dem Erreichen des maximalen Füllstandes wird der Überladeprozess ebenso automatisch unterbrochen wie bei der Feststellung der Abwesenheit des Transportfahrzeuges 34.

Im Schritt S6 wird das Auftreten eines kritischen Prozesszustandes überwacht. Ein kritischer Prozesszustand ist dadurch charakterisiert, dass ein anders Arbeitsorgan 20 als die Korntankentleervorrichtung 28 einen Betriebszustand annimmt, in welchem das Arbeitsergebnis oder das Betriebsverhalten nicht dem angestrebten entspricht. Beispielsweise ist das Verteilbild des von der als Radialverteiler ausgebildeten Häckselgutverteilvorrichtung ausgebrachten Erntegutes auf dem Boden nicht gleichmäßig oder die Verteilung erreicht nicht die angestrebte Verteilbreite, was einem kritischen Prozesszustand entspricht. Weiterhin kann die Situation auftreten, dass in Folge des Betreibens des Antriebes 32 bei Motordrückung, das heißt im Grenzlastbetrieb, und gleichzeitigem Abrufen zusätzlicher Leistungsreserven das Betriebsverhalten des Antriebes 32 einen kritischen Zustand annimmt, der zu einem Absterben des Antriebs 32 führen kann. Damit verbunden wären das Auftreten von Verstopfungen in den Arbeitsorganen der Erntemaschine 1, welche nur mit hohem zeitlichem Aufwand zu beseitigen sind. Das Auftreten eines kritischen Prozesszustandes führt zu einer Unterbrechung des Überladeprozesses gemäß dem Schritt S7, um von der Korntankentleervorrichtung 28 gebundene Antriebsleistung freizugeben.

Die durch die Unterbrechung des Überladeprozesses frei werdende Antriebsleitung wird in Abhängigkeit von der Betriebssituation durch die Steuerungseinrichtung 23 zumindest einem Arbeitsorgan 20 zugewiesen, falls sich dieses in einem kritischen Prozesszustand befindet, um diesen durch diese unterstützende Maßnahme zu beseitigen.

**Bezugszeichenliste**

| | | | |
|---|---|---|---|
| **1** | Erntemaschine | **28** | Korntankentleervorrichtung |
| **2** | Mähdrescher | **28a** | Korntankauslaufrohr |
| **3** | Getreideschneidwerk | **29** | Eingabeeinrichtung |
| **4** | Schrägförderer | **30** | Auffangboden |
| **5** | Pfeil | **31** | Überkehrelevator |
| **6** | Dreschkorb | **32** | Antrieb |
| **7** | Dreschorgane | **33** | Optische Sensorvorrichtung |
| **7a** | Vorbeschleunigungstrommel | **34** | Transportfahrzeug |
| **7b** | Dreschtrommel | **35** | Traktor |
| **8** | Zuführtrommel | **36** | Anhänger |
| **9** | Hordenschüttler | **37** | Sensorvorrichtung |
| **10** | Abscheideeinrichtung | **38** | Freies Ende Korntankauslaufrohr |
| **11** | Korn | **39** | Auftreffpunkt |
| **12** | Rücklaufboden | **40** | Häckselvorrichtung |
| **13** | Zuführboden | **41** | Verteilvorrichtung |
| **14** | Siebebene | **42** | Häckseltrommel |
| **15** | Siebebene | **43** | Häckslergehäuse |
| **16** | Gebläse | **44** | Messer |
| **17** | Reinigungseinrichtung | **45** | Gegenmesser |
| **18** | Elevator | **46** | Bussystem |
| **19** | Korntank | | |
| **20** | Arbeitsorgan | **V_{E}** | Fahrgeschwindigkeit |
| **21** | Fahrerkabine | **V_{T}** | Fahrgeschwindigkeit |
| **22** | Anzeigeeinrichtung | **ϕ** | Schwenkwinkel |
| **23** | Steuerungseinrichtung | | |
| **24** | Bedienperson | | |
| **25** | Haspel | | |
| **26** | Messerbalken | | |
| **27** | Einzugsförderschnecke | | |

## Patentansprüche

1. Verfahren zur Steuerung eines im laufenden Erntebetrieb stattfindenden, von einer Steuerungseinrichtung (23) gesteuerten Überladeprozesses zwischen einer mehrere Arbeitsorgane (20) umfassenden selbstfahrenden Erntemaschine (1, 2) und einem Transportfahrzeug (34), während dessen von einer Überladevorrichtung (28) der Erntemaschine (1, 2) Erntegut an das Transportfahrzeug (34) übergeben wird, wobei während des Überladeprozesses durch die Steuerungseinrichtung (23) eine Überwachung der Betriebssituation der Erntemaschine (1, 2) durchgeführt wird, und wobei bei einem Erkennen einer kritischen Betriebssituation durch die Steuerungseinrichtung (23) automatisch eine Abschaltung der Überladevorrichtung (28) initiiert wird, **dadurch gekennzeichnet, dass** mit dem Starten des Überladeprozesses in einem ersten Schritt (S1) der Prozess der Überwachung des Überladens während des parallel hierzu ablaufenden Erntevorganges beginnt, und in den nachfolgenden Schritten (S2 - S6) sequentiell geprüft wird, ob eine kritische Betriebssituation eingetreten ist, die ein Stoppen des Überladens gemäß einem weiteren Schritt (S7) erforderlich werden lässt, wobei die durch die Unterbrechung des Überladeprozesses frei werdende Antriebsleistung von der Steuerungseinrichtung (23) zumindest einem Arbeitsorgan (20) zugewiesen wird, wobei sie gezielt dem Arbeitsorgan (20) zugewiesen wird, welches eine Überlast an die Steuerungseinrichtung (23) signalisiert.

2. Verfahren nach Anspruch 1, **dadurch gekennzeichnet, dass** die Betriebssituation der selbstfahrenden Erntemaschine (1, 2) von verschiedenen internen und externen Parametern beeinflusst wird, wobei die Parameter umfassen:
• einen Eingriff der Bedienperson (24) in den Fahrbetrieb, indem dieser die Erntemaschine (1, 2) abrupt beschleunigt oder verzögert, wodurch sich die Fahrgeschwindigkeiten (V_{E}, V_{T}) der Erntemaschine (1, 2) und des Transportfahrzeuges (34) relativ zueinander verändern;
• eine außergewöhnliche Fahrsituation, insbesondere eine Detektion eines Hindernisses vor der Erntemaschine (1) und/oder dem Transportfahrzeug (34);
• das Erreichen des maximalen Füllstandes des Transportfahrzeugs (34);
• die Einhaltung von Qualitätsvorgaben an das Ergebnis des Bearbeitungsprozesses durch die Erntemaschine (1, 2).

3. Verfahren nach einem der Ansprüche 1 bis 2, **dadurch gekennzeichnet, dass** durch ein Bussystem (46) zumindest ein eine Betriebssituation repräsentierendes Signal an die Steuerungseinrichtung (23) übertragen wird, welches zur Erkennung der Betriebssituation von der Steuerungseinrichtung (23) ausgewertet wird.

4. Verfahren nach einem der Ansprüche 1 bis 3, **dadurch gekennzeichnet, dass** mittels einer optischen Sensoreinrichtung (33) an der Erntemaschine (1, 2) das Vorhandensein eines Hindernisses im Vorfeld der Erntemaschine (1, 2) und/oder des Transportfahrzeuges (34) detektiert wird.

5. Verfahren nach einem der Ansprüche 1 bis 4, **dadurch gekennzeichnet, dass** mittels einer Sensorvorrichtung (37) an der Überladevorrichtung (28) die Bereitschaft des Transportfahrzeuges (34) zum Überladen detektiert und als ein Bereitschaftssignal an die Steuerungseinrichtung (23) weitergeleitet wird.

6. Verfahren nach einem der Ansprüche 1 bis 5, **dadurch gekennzeichnet, dass** mittels einer Sensorvorrichtung (37) an der Überladevorrichtung (28) die Bereitschaft des Mähdreschers (1, 2) zum Überladen detektiert und als ein Bereitschaftssignal an die Steuerungseinrichtung (23) weitergeleitet wird.

7. Verfahren nach einem der Ansprüche 5 oder 6, **dadurch gekennzeichnet, dass** in Abhängigkeit von dem Bereitschaftssignal die Überladevorrichtung (28) automatisch ein- oder ausgeschaltet wird.

8. Verfahren nach einem der Ansprüche 1 bis 7, **dadurch gekennzeichnet, dass** mittels eines Drehzahlsensors ein Absinken der Antriebsdrehzahl eines das Erntegut abscheidenden Arbeitsorgans (20) detektiert und als ein Drehzahlsignal an die Steuerungseinrichtung (23) weitergeleitet wird.

9. Verfahren nach einem der Ansprüche 1 bis 8, **dadurch gekennzeichnet, dass** das Auftreten von Schlupf an einem Arbeitsorgan (20) detektiert und als ein Schlupfsignal an die Steuerungseinrichtung (23) weitergeleitet wird.

10. Verfahren nach einem der Ansprüche 1 bis 9, **dadurch gekennzeichnet, dass** eine Lenkbewegung sensorisch erfasst und als ein Lenksignal an die Steuerungseinrichtung (23) weitergeleitet wird.

11. Verfahren nach einem der Ansprüche 1 bis 10, **dadurch gekennzeichnet, dass** der Betrag einer Beschleunigung der Erntemaschine (1, 2) erfasst und als ein Beschleunigungssignal an die Steuerungseinrichtung (23) weitergeleitet wird.

12. Verfahren nach einem der Ansprüche 1 bis 11, **dadurch gekennzeichnet, dass** ein die Qualität eines Bearbeitungsprozesses eines Arbeitsorganes (20) repräsentierendes Qualitätssignal an die Steuerungseinrichtung (23) weitergeleitet wird.

13. Selbstfahrende Erntemaschine (1, 2) mit einer Steuerungseinrichtung (23), die dazu eingerichtet ist, einen im laufenden Erntebetrieb stattfindenden Überladeprozess, während desjenigen von einer Überladevorrichtung (28) der mehrere Arbeitsorgane (20) umfassenden Erntemaschine (1, 2) Erntegut an ein Transportfahrzeug (34) übergeben wird, zu steuern, wobei die Steuerungseinrichtung (23) dazu eingerichtet ist, während des Überladeprozesses eine Überwachung der Betriebssituation der Erntemaschine (1, 2) durchzuführen und bei einem Erkennen einer kritischen Betriebssituation automatisch eine Abschaltung der Überladevorrichtung (28) zu initiieren, **dadurch gekennzeichnet, dass** die Steuerungseinrichtung (23) weiterhin dazu eingerichtet ist, mit dem Starten des Überladeprozesses in einem ersten Schritt (S1) den Prozess der Überwachung des Überladens während des parallel hierzu ablaufenden Erntevorganges zu beginnen, und in den nachfolgenden Schritten (S2 - S6) sequentiell zu prüfen, ob eine kritische Betriebssituation eingetreten ist, die ein Stoppen des Überladens gemäß einem weiteren Schritt (S7) erforderlich werden lässt, wobei die Steuerungseinrichtung (23) weiterhin dazu eingerichtet ist die durch die Unterbrechung des Überladeprozesses frei werdende Antriebsleistung zumindest einem Arbeitsorgan (20) zuzuweisen, wobei die frei werdende Antriebsleistung gezielt dem Arbeitsorgan (20) zugewiesen wird, welches eine Überlast an die Steuerungseinrichtung (23) signalisiert.

14. Selbstfahrende Erntemaschine (1) nach Anspruch 13, **dadurch gekennzeichnet, dass** die Erntemaschine (1) als Mähdrescher (2) ausgeführt ist.

## Claims

1. A method of controlling a transloading process which takes place in ongoing harvesting operation and which is controlled by a control device (23) between a self-propelled harvester (1, 2) including a plurality of working members (20) and a transport vehicle (34), during which crop material is transferred to the transport vehicle (34) by a transloading device (28) of the harvester (1, 2), wherein monitoring of the operating situation of the harvester (1, 2) is carried out during the transloading process by the control device (23) and wherein upon detection of a critical operating situation by the control device (23) shutdown of the transloading device (28) is automatically initiated, **characterised in that** with the start of the transloading process in a first step (S1) the process of monitoring the transloading procedure begins during the harvesting operation which takes place in parallel therewith and in the subsequent steps (S2 - S6) the method involves sequentially checking whether a critical operating system has occurred, which causes a need to stop the transloading operation in accordance with a further step (S7), wherein the drive power which becomes free due to the interruption in the transloading process is attributed by the control device (23) to at least one working member (20), wherein it is attributed specifically to the working member (20) which signals an overload to the control device (23).

2. A method according to claim 1 **characterised in that** the operating situation of the self-propelled harvester (1, 2) is influenced by various internal and external parameters, wherein the parameters include:
• intervention of the operator (24) in the travel mode by same abruptly accelerating or decelerating the harvester (1, 2) whereby the travel speeds (V_{E}, V_{T}) of the harvester (1, 2) and the transport vehicle (34) change relative to each other;
• an exceptional travel situation, in particular detection of an obstacle in front of the harvester (1) and/or the transport vehicle (34);
• attainment of the maximum filling state of the transport vehicle (34); and
• compliance of quality specifications to the result of the processing process by the harvester (1, 2).

3. A method according to one of claims 1 to 2 **characterised in that** at least one signal representing an operating situation is transmitted by a bus system (46) to the control device (23), which signal is evaluated by the control device (23) to recognise the operating situation.

4. A method according to one of claims 1 to 3 **characterised in that** the presence of an obstacle in the area in front of the harvester (1, 2) and/or the transport vehicle (34) is detected by means of an optical sensor device (33) on the harvester (1, 2).

5. A method according to one of claims 1 to 4 **characterised in that** the readiness of the transport vehicle (34) for transloading is detected by means of a sensor device (37) on the transloading device (28) and passed as a readiness signal to the control device (23).

6. A method according to one of claims 1 to 5 **characterised in that** the readiness of the combine harvester (1, 2) for transloading is detected by means of a sensor device (37) on the transloading device (28) and passed as a readiness signal to the control device (23).

7. A method according to one of claims 5 and 6 **characterised in that** the transloading device (28) is switched on or off automatically in dependence on the readiness signal.

8. A method according to one of claims 1 to 7 **characterised in that** a drop in the drive speed of a working member (20) separating the crop material is detected by means of a rotary speed sensor and passed as a rotary speed signal to the control device (23).

9. A method according to one of claims 1 to 8 **characterised in that** the occurrence of slip at a working member (20) is detected and passed as a slip signal to the control device (23).

10. A method according to one of claims 1 to 9 **characterised in that** a steering movement is detected by sensor means and passed as a steering signal to the control device (23).

11. A method according to one of claims 1 to 10 **characterised in that** the magnitude of acceleration of the harvester (1, 2) is detected and passed as an acceleration signal to the control device (23).

12. A method according to one of claims 1 to 11 **characterised in that** a quality signal representing the quality of a processing process of a working member (20) is passed to the control device (23).

13. A self-propelled harvester (1, 2) having a control device (23) which is adapted to control a transloading process which takes place in ongoing harvesting operation and during which crop material is transferred to a transport vehicle (34) by a transloading device (28) of the harvester (1, 2) which includes a plurality of working members (20), wherein the control device (23) is adapted to carry out monitoring of the operating situation of the harvester (1, 2) during the transloading process and upon recognition of a critical operating situation to automatically initiate a shutdown of the transloading device (28), **characterised in that** the control device (23) is further adapted with the start of the transloading process in a first step (S1) to begin the process of monitoring the transloading operation during the harvesting operation which takes place in parallel therewith and in the following steps (S2 - S6) to sequentially check whether a critical operating situation has occurred which causes a need to stop the transloading operation in accordance with a further step (S7), wherein the control device (23) is furthered adapted to attribute the drive power which becomes free due to the interruption in the transloading process to at least one working member (20), wherein the drive power which becomes free is attributed specifically to the working member (20) which signals an overload to the control device (23).

14. A self-propelled harvester (1) according to claim 13 **characterised in that** the harvester (1) is in the form of a combine harvester (2).

## Revendications

1. Procédé de commande d'un processus de transfert, ayant lieu en cours de récolte, commandé par un équipement de commande (23), entre une machine de récolte automotrice (1, 2) comprenant plusieurs organes de travail (20) et un véhicule de transport (34), pendant lequel du produit récolté est transmis au véhicule de transport (34) par un dispositif de transfert (28) de la machine de récolte (1, 2), une surveillance de la situation de marche de la machine de récolte (1, 2) étant réalisée par l'équipement de commande (23) pendant le processus de transfert, et une mise hors service du dispositif de transfert (28) étant déclenchée automatiquement en cas de détection d'une situation de marche critique par l'équipement de commande (23), **caractérisé en ce qu'**avec le démarrage du processus de transfert commence, dans une première étape (S1), le processus de surveillance du transfert pendant l'opération de récolte qui se déroule en parallèle et, dans les étapes suivantes (S2 - S6), a lieu un contrôle séquentiel pour savoir si s'est produite une situation de marche critique qui rend nécessaire un arrêt du transfert conformément à une autre étape (S7), la puissance d'entraînement libérée par l'interruption du processus de transfert étant affectée par l'équipement de commande (23) à au moins un organe de travail (20), celle-ci étant affectée de manière ciblée à l'organe de travail (20) qui signale une surcharge à l'équipement de commande (23).

2. Procédé selon la revendication 1, **caractérisé en ce que** la situation de marche de la machine de récolte automotrice (1, 2) est influencée par divers paramètres intérieurs et extérieurs, les paramètres comprenant :
• une intervention de l'opérateur (24) sur le régime de marche, au cours de laquelle celui-ci accélère ou ralentit brutalement la machine de récolte (1, 2), de sorte que les vitesses de marche (V_{E}, V_{T}) de la machine de récolte (1, 2) et du véhicule de transport (34) varient l'une par rapport à l'autre ;
• une situation de marche exceptionnelle, en particulier une détection d'un obstacle devant la machine de récolte (1) et/ou le véhicule de transport (34) ;
• l'atteinte du niveau de remplissage maximal du véhicule de transport (34) ;
• le respect de prescriptions qualitatives imposées au résultat du processus de traitement réalisé par la machine de récolte (1, 2).

3. Procédé selon une des revendications 1 à 2, **caractérisé en ce que** par l'intermédiaire d'un système de bus (46) est transmis à l'équipement de commande (23) au moins un signal qui représente la situation de marche et qui est analysé par l'équipement de commande (23) pour reconnaître la situation de marche.

4. Procédé selon une des revendications 1 à 3, **caractérisé en ce que** la présence d'un obstacle dans la zone d'approche de la machine de récolte (1, 2) et/ou du véhicule de transport (34) est détectée au moyen d'un dispositif de capteur optique (33) sur la machine de récolte (1, 2).

5. Procédé selon une des revendications 1 à 4, **caractérisé en ce que** la disponibilité du véhicule de transport (34) à transférer est détectée par un dispositif de capteur (37) sur le dispositif de transfert (28) et transmise à l'équipement de commande (23) sous la forme d'un signal de disponibilité.

6. Procédé selon une des revendications 1 à 5, **caractérisé en ce que** la disponibilité de la moissonneuse-batteuse (1, 2) à transférer est détectée au moyen d'un dispositif de capteur (37) sur le dispositif de transfert (28) et transmise à l'équipement de commande (23) sous la forme d'un signal de disponibilité.

7. Procédé selon une des revendications 5 ou 6, **caractérisé en ce que** le dispositif de transfert (28) est mis automatiquement en ou hors service en fonction du signal de disponibilité.

8. Procédé selon une des revendications 1 à 7, **caractérisé en ce qu'**une baisse de la vitesse de rotation d'entraînement d'un organe de travail (20) séparant le produit récolté est détectée au moyen d'un capteur de vitesse de rotation et transmise à l'équipement de commande (23) sous la forme d'un signal de vitesse de rotation.

9. Procédé selon une des revendications 1 à 8, **caractérisé en ce que** la survenue de glissement au niveau d'un organe de travail (20) est détectée et transmise à l'équipement de commande (23) sous la forme d'un signal de glissement.

10. Procédé selon une des revendications 1 à 9, **caractérisé en ce qu'**un mouvement directionnel est détecté au moyen d'un capteur et transmis à l'équipement de commande (23) sous la forme d'un signal directionnel.

11. Procédé selon une des revendications 1 à 10, **caractérisé en ce que** la valeur d'une accélération de la machine de récolte (1, 2) est enregistrée et transmise à l'équipement de commande (23) sous la forme d'un signal d'accélération.

12. Procédé selon une des revendications 1 à 11, **caractérisé en ce qu'**un signal de qualité représentant la qualité d'un processus de traitement d'un organe de travail (20) est transmis à l'équipement de commande (23).

13. Machine de récolte automotrice (1, 2) comprenant un équipement de commande (23) qui est agencé pour commander un processus de transfert ayant lieu en cours de récolte, pendant lequel du produit récolté est transmis à un véhicule de transport (34) par un dispositif de transfert (28) de la machine de récolte (1, 2) comportant plusieurs organes de travail (20), l'équipement de commande (23) étant agencé pour réaliser, pendant le processus de transfert, une surveillance de la situation de marche de la machine de récolte (1, 2) et, en cas de détection d'une situation de marche critique, pour déclencher automatiquement une mise hors service du dispositif de transfert (28), **caractérisée en ce qu'**en outre l'équipement de commande (23) est agencé pour commencer, avec le démarrage du processus de transfert dans une première étape (S1), le processus de surveillance du transfert pendant l'opération de récolte qui se déroule en parallèle et, dans les étapes suivantes (S2 - S6), contrôler de manière séquentielle si s'est produite une situation de marche critique qui rend nécessaire un arrêt du transfert conformément à une autre étape (S7), l'équipement de commande (23) étant agencé en outre pour affecter la puissance d'entraînement libérée par l'interruption du processus de transfert à au moins un organe de travail (20), la puissance d'entraînement libérée étant affectée de manière ciblée à l'organe de travail (20) qui signale une surcharge à l'équipement de commande (23).

14. Machine de récolte automotrice (1) selon la revendication 13, **caractérisée en ce que** la machine de récolte (1) est conformée en moissonneuse-batteuse (2).
